# FASCICULE DE BREVET EUROPEEN

(11) **EP 1 541 376 B1**
(45) Date de publication et mention de la délivrance du brevet: **02.05.2007**
(21) Numéro de dépôt: 04292939.8
(22) Date de dépôt: 10.12.2004
(51) Int. Cl.: B60B 27/00, B60B 3/16, B60T 1/06

(54) **Roue de véhicule utilitaire**
Rad eines Nutzfahrzeuges
Wheel of a commercial vehicle

(30) Priorité: 12.12.2003 FR 0314576
(43) Date de publication de la demande: 15.06.2005
(73) Titulaire: MEFRO ROUES FRANCE, 10600 La Chapelle St. Luc (FR)
(72) Inventeur: Alff, Denis, 63200 Malauzat (FR)
(74) Mandataire: Abello, Michel

(56) Documents cités:
- DE-A- 19 647 391
- DE-U- 29 915 636
- FR-A- 2 755 195
- GB-A- 2 109 874
- US-A- 5 911 425
- US-B1- 6 250 431

## Description

La présente invention concerne une roue de véhicule utilitaire du genre poids lourd (pour le transport de personnes ou de marchandises), leur remorque et semi-remorque, comportant une jante, un voile de roue lié solidement à ladite jante, un moyeu, un disque de frein centré par rapport audit moyeu, ledit voile et ledit disque comprenant un alésage central plus petit que le diamètre externe dudit moyeu, et une pluralité de moyens de fixation fixant à la fois ledit voile et ledit disque audit moyeu, lesdits moyens de fixation étant répartis sur un cercle au moins approximativement centré par rapport à l'axe dudit moyeu.

Une telle roue est déjà connue notamment par le modèle d'utilité DE 299 15 636.

Ce modèle d'utilité décrit une telle roue de véhicule utilitaire et de leur remorque présentant un voile de roue se prolongeant, en une seule pièce, de la jante vers l'axe de la roue de façon que des moyens de fixation par vissage puissent fixer à la fois le voile et le disque de frein au moyeu. Ce type de voile remplaçait l'ensemble voile et porte-jante communément utilisé dans la construction de roues de véhicules utilitaires lourds.

Ce type de roue présente de nombreux avantages.

Tout d'abord, il divise par deux le nombre de moyens de fixation par vissage. En effet, auparavant, le voile était fixé au porte-jante par un premier jeu de boulons, et le porte-jante était lui même solidarisé par un deuxième jeu de boulons avec le disque de frein et le moyeu. D'après ce modèle d'utilité, seulement un jeu de boulons est nécessaire pour solidariser le voile au disque et au moyeu. Par conséquent, les opérations d'assemblage sont amplifiées et le temps de montage est diminué.

De plus, l'élimination du porte-jante de la structure se traduit également par une limitation conséquente du poids de la roue.

Enfin, le nombre de portées permettant le centrage des divers éléments de la roue les uns par rapport aux autres est moindre. Aussi, selon le modèle d'utilité, seul le centrage du disque sur le moyeu est effectué par des portées car le centrage du voile de la roue sur le disque est effectué par vissage des boulons de l'unique jeu de boulons précédemment cité. Ceci a pour conséquence de limiter de façon importante l'usinage des pièces et donc d'en diminuer son coût.

Cependant, malgré une optimisation du poids, du nombre de pièces, des opérations d'assemblage et donc du coût, le type de roue divulguée par modèle d'utilité DE 299 15 636 ne permet pas d'assurer toujours un centrage correct et précis de la roue sur son moyeu.

Or, un centrage incorrect génère des efforts nuisibles au confort de route, voire à la bonne dynamique du véhicule qui peuvent avoir des conséquences graves sur la sécurité du véhicule.

Dans l'art antérieur, défini par le préambule de la revendication 1 et représenté par le modèle d'utilité DE 299 15 636, le centrage des roues est effectué, comme il a été énoncé précédemment par vissage des boulons qui sont destinés, traditionnellement, à seulement solidariser le voile et le disque de frein au moyeu. Ce type de centrage implique cependant, d'effectuer le vissage par cycles successifs de serrage progressif des boulons. Si ce type de vissage, quelque peu imprécis et contraignant, n'est pas appliqué, la roue n'est pas centrée, ce qui peut impliquer les conséquences graves énoncées précédemment.

De plus, le centrage par vissage des boulons peut devenir encore plus imprécis après plusieurs cycles de montage et démontage de la roue. En effet, le montage et le démontage de la roue impliquent le vissage et dévissage des boulons précédemment cités et par conséquent une certaine usure des têtes de boulons et des pas de vis accueillant les boulons. L'usure des têtes de boulons et des pas de vis, empêchant un vissage correct des boulons, nuit donc au centrage de la roue.

Enfin, ce type de centrage n'est pas durable. En effet, l'utilisation du véhicule muni de roues centrées de cette manière, induit un certain jeu entre les boulons et le trou taraudé qui les accueille, ce qui rend le centrage encore plus incertain.

L'invention a pour but de proposer un type de roue de véhicule utilitaire du genre poids lourd, leur remorque et semi-remorque qui évite les inconvénients précités, qui permette un centrage précis et durable de la roue et qui est optimisé en terme de poids, de nombre de pièces, d'opération de montage et donc de coût.

A cet effet, l'invention a pour objet une roue de véhicule utilitaire du genre poids lourd, leur remorque et semi-remorque, comportant une jante, un voile de roue lié solidement à ladite jante, un moyeu, un disque de frein, ledit voile et ledit disque comprenant un alésage central plus petit que le diamètre externe dudit moyeu, et une pluralité de moyens de fixation fixant à la fois ledit voile et ledit disque audit moyeu, lesdits moyens de fixation étant répartis sur un cercle au moins approximativement centré par rapport à l'axe dudit moyeu, caractérisée en ce que ledit moyeu comporte une portée cylindrique disposée radialement à l'extérieur par rapport aux moyens de fixation du voile et du disque et destinée à coopérer avec une portée cylindrique de diamètre correspondant dudit disque de frein pour centrer axialement ledit disque, et en ce que ledit disque de frein coopère avec une collerette reçue dans et disposée coaxialement à l'alésage central du voile de roue et radialement à l'intérieur par rapport aux moyens de fixation du voile et du disque sur le moyeu et formant une portée cylindrique de diamètre correspondant au diamètre intérieur calibré dudit alésage central du voile de roue pour centrer axialement ledit voile de roue.

Selon un mode de réalisation de l'invention, ladite collerette fait partie intégrante dudit disque de frein.

Selon un autre mode de réalisation de l'invention, ladite collerette est une pièce rapportée fixée dans ledit alésage dudit disque de frein.

Avantageusement, ladite collerette appartient à un capuchon de protection masquant l'alésage central du moyeu de la roue.

De préférence, la collerette est continue dans le sens circonférentiel.

Selon une variante de l'invention, la collerette est discontinue dans le sens circonférentiel.

Selon une autre variante, la collerette comporte des zones discontinues de centrage espacées le long de sa circonférence et constituant des portées préférentielles d'appui et de centrage pour le voile.

Le disque de frein sert de pièce intermédiaire de centrage. Il est lui-même centré sur le moyeu par une portée cylindrique et assure aussi le centrage du voile par une autre portée cylindrique. Ce montage est présenté dans les figures jointes pour une roue non motrice, mais il s'applique aussi dans le cas d'une roue motrice.

Ce mode de centrage est particulièrement avantageux dans le cas de véhicules poids lourd lorsque les charges portées nécessitent des roulements de grande dimension rendant difficile, voire impossible, les montages classiques utilisés notamment pour des véhicules de tourisme dans lesquels le centrage du voile et du disque est assuré par le moyeu lui-même. Un exemple d'un tel montage est présenté dans le document US 6250431.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemple purement illustratifs et non limitatifs, en référence aux dessins schématiques annexés.

Sur ces dessins,
- la figure 1 est une demi-coupe schématique d'une roue selon un premier mode de réalisation de l'invention dans un plan passant par l'axe de la roue ;
- la figure 2 est une vue agrandie et partielle de la collerette suivant un second mode de réalisation selon la même coupe que la figure 1 ; et
- la figure 3 est une vue, semblable à celle de la figure 2, d'une collerette selon un troisième mode de réalisation.

La roue 1 selon l'invention comprend essentiellement un voile 2, une jante 3, un disque de frein 4, un moyeu 5 et des moyens de fixations 6 pour fixer le voile 2 et le disque de frein 4 au moyeu 5.

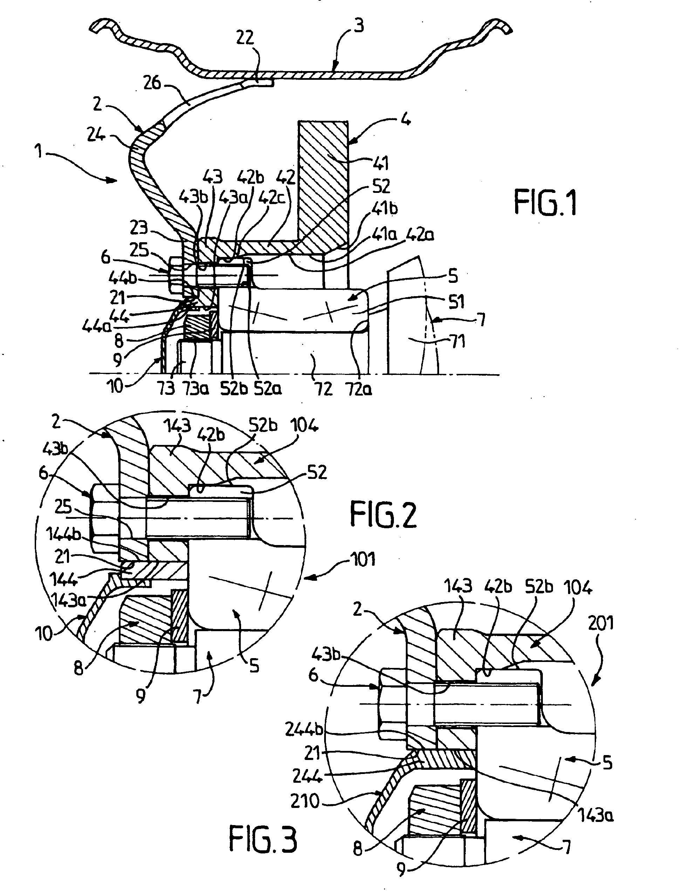

Selon un premier mode de réalisation représenté sur la figure 1, on voit que le voile 2, constitué d'une tôle sensiblement en forme de disque, présente un alésage central 21. La partie radialement externe 22 du voile 2 est reliée à la jante 3 de manière fixe par soudage. La partie radialement interne 23 présente, autour de l'alésage 21, une série d'orifices 25 circulaires dont les centres sont répartis sur un cercle centré sur l'axe dudit alésage 21. La partie intermédiaire 24 du voile 2 présente une courbure convexe vers l'extérieur de la roue 1. A proximité de la partie externe 22, le voile 2 présente une série d'ouvertures de ventilation 26 réparties sur un cercle centré sur l'axe de l'alésage 21.

Le disque 4 selon la figure 1 est un disque de frein simplifié qui présente successivement dans le sens axial quatre parties, une partie interne 41, une partie intermédiaire 42, une partie externe 43 et une collerette 44. La partie interne 41 a globalement une forme de disque et présente un alésage central 41 a évasé en cône 41b, du côté le plus interne. La partie intermédiaire 42, sous forme cylindrique, avec un diamètre extérieur plus petit que le diamètre extérieur de la partie 41, présente, du côté de la partie interne 41, un premier alésage 42a du même diamètre que l'alésage 41 a. La partie intermédiaire 42 présente du côté de la partie externe 43, un alésage calibré 42b dont le diamètre est inférieur à celui de l'alésage 42a et qui se raccorde à ce dernier par une partie conique 42c. La partie externe 43 a globalement une forme de disque avec un alésage central 43a qui constitue le plus petit diamètre du disque de frein 4, et une série d'orifices circulaires lisses 43b qui sont disposés autour de l'alésage central 43a. Les orifices 43b ont sensiblement le même diamètre que les orifices 25 du voile 2 et leurs centres sont répartis sur un cercle de même diamètre que le cercle sur lequel se trouvent les centres des orifices 25, de telle façon que chaque orifice 25 puisse être placé en coïncidence avec un des orifices 43b du disque de frein 4. La dernière partie 44 du disque 4 se présente sous la forme d'une collerette, continue dans le sens circonférentiel qui s'étend axialement vers l'extérieur et qui a un diamètre extérieur calibré plus petit que celui des cercles susmentionnés sur lesquels se trouvent les orifices 25 et 43b. La valeur du diamètre extérieur calibré de la collerette 44 correspond à celle du diamètre calibré de l'alésage central 21 du voile 2, de telle sorte que la collerette 44 forme une portée cylindrique 44b apte à assurer le centrage du voile 21 par rapport au disque de frein 4.

Le moyeu 5 selon la figure 1 est un exemple de réalisation schématique dans le cas d'une roue non-motrice d'un moyeu traditionnel qui présente deux parties, une partie interne fixe 51 et une partie externe 52 mobile en rotation. La partie interne 51 de forme sensiblement cylindrique présente un alésage central conformé et dimensionné pour être monté sur une fusée 7 d'un essieu du véhicule. La partie externe 52 se présente globalement sous la forme d'un disque qui a un diamètre extérieur calibré dont la valeur correspond à celle de l'alésage calibré 42b de la partie 42 du disque de frein 4. Ainsi la partie 52 du moyeu 5 forme une portée cylindrique 52b apte à assurer le centrage du disque de frein 4 par rapport au moyeu 5. La partie externe 52 présente, en outre, une série d'orifices taraudés 52a dont les centres sont répartis sur un cercle qui est centré sur l'axe de l'alésage du moyeu 5 et dont le diamètre est égal à celui des cercles susmentionnés sur lesquels se retrouvent les centres des orifices 25 et 43b.

Les orifices 25, 43b et 52a sont en nombre égaux et disposés en vis à vis.

Les moyens de fixation 6, ici des boulons, sont disposés dans les orifices 25, 43b et 52a précédemment cités, c'est à dire selon un cercle au moins approximativement centré par rapport à l'axe dudit moyeu 5 et solidarisant ensemble le voile 2 et le disque de frein 4 au moyeu 5.

La fusée 7 comporte trois parties : un partie interne 71, partiellement représentée et qui ne sera pas décrite, une partie intermédiaire 72 et une partie externe 73. La partie intermédiaire 72 présente un diamètre plus petit que celui de la partie interne 71 de manière à former entre elles un épaulement 72a. La partie externe 73 présente un filetage externe 73a.

Un écrou 8 et une rondelle 9 sont disposés autour du filetage externe 73a précédemment cité pour immobiliser axialement le moyeu 5 par rapport à la fusée 7.

Enfin, la roue 1 peut comporter en outre, un capuchon 10 qui est emboîté à force dans l'alésage central 44a de la collerette 44. Le capuchon 10, masquant l'alésage central du moyeu 5, assure une fonction de protection et d'étanchéité pour l'ensemble des éléments logés dans l'alésage du moyeu 5 par rapport à l'extérieur de la roue 1.

Selon ce premier mode de réalisation, les boulons 6 solidarisent, après avoir été vissés dans les trous taraudés 52a du moyeu 5, le voile 2 et le disque 4 au moyeu 5.

Le voile 2, une fois fixé au moyeu 5 par l'intermédiaire des boulons 6, assure seul, contrairement aux roues comprenant un porte-jante, le lien entre la jante 3 et le moyeu 5. Il permet également la transmission du mouvement de rotation du moyeu 5 à la roue 1. Le voile 2, réalisé en tôle emboutie et/ou fluotournée, est relié à la jante 3 par emboîtage et soudage. La fabrication du voile 2 selon l'invention, en une seule pièce, conserve la partie interne 23 qui est traditionnellement rebutée lors de la fabrication des roues comprenant un porte-jante. Ceci a pour conséquence d'éviter une chute de matière importante.

La collerette 44 qui assure le centrage du voile 2 de la roue 1 est donc ici réalisée dans la masse du disque de frein 4.

Il résulte que seules quatre portées cylindriques 21, 44b, 42b et 52b conduisent à un centrage précis du voile 2 et du disque 4 de la roue 1 par rapport au moyeu 5, alors que six portées sont indispensables dans une roue de poids lourd traditionnelle présentant un porte-jante. Cette diminution du nombre de portées a pour conséquence un coût d'usinage moindre.

En outre, dans ce premier mode de réalisation, le même processus d'usinage peut être utilisé pour usiner la portée cylindrique externe 44b de la collerette 44 et la portée cylindrique interne 42b du disque 4. Par conséquent, ce même processus d'usinage garantit la meilleure précision possible et n'engendre pas de surcoût.

Enfin, selon l'invention, étant donné que le centrage du voile 2 sur le disque 4 se fait par l'intermédiaire de portées cylindriques, à savoir la portée externe 44b de la collerette 44 et l'alésage central 21 du voile 2, on obtient un centrage précis et constant. Par conséquent, contrairement à l'art antérieur divulgué par le modèle d'utilité DE 299 15 636, un centrage précis et durable du voile 2 sur le disque 4 est permis grâce à la collerette 44.

Il est évident que ce mode de réalisation n'est nullement limité à la forme de collerette décrite, ladite collerette ou des zones de centrage de celle-ci (portées préférentielles) pouvant être par exemple discontinues dans le sens circonférentiel, avoir une épaisseur ou une dimension variable.

En outre, des moyens de fixations autres que des boulons 6, peuvent également être utilisés, comme par exemple des goujons liés rigidement au moyeu 5 à la place des trous taraudés 52a et recevant des écrous pour fixer le disque 4 et le voile 2 au moyeu 5.

La figure 2 présente un deuxième mode de réalisation de l'invention. Les éléments identiques à ceux du premier mode de réalisation portent les mêmes références et ne seront pas à nouveau décrits.

Le disque de frein 104 ne présente pas de collerette et la partie externe 143 du disque 104 comporte un alésage central 143a dont le diamètre, plus important que celui de l'alésage 43a précédemment cité, est juste plus petit que celui de l'alésage central calibré 21 du voile 2. L'alésage 143a, doit être calibré, contrairement au cas précédent, car il constitue ici une portée au même titre que l'alésage 21.

La collerette de centrage 144, continue dans le sens circonférentiel, est ici constituée par une douille qui présente un diamètre externe calibré sur toute la longueur axiale de la douille et qui est emmanchée à force dans l'alésage 143a du disque 104. Après emmanchement, la partie de la douille 144 qui fait saillie axialement à l'extérieur du disque 104, forme une portée cylindrique 144b qui, en collaboration avec les portées constituées par l'alésage 143a du disque 104 et l'alésage central 21 du voile 2, permet le centrage de la roue 101 sur le disque 104.

Ce mode de réalisation diffère donc du précédent par le fait que la collerette de centrage 144 ne fait pas partie intégrante du disque de frein 104 mais est une pièce rapportée, indépendante du disque 104.

Le capuchon 10 est ici emboîté à force dans la collerette 144 de la même façon que dans le mode de réalisation précédent.

Il est évident que la collerette 144 peut être fixée au disque 104 par d'autres moyens de fixation qu'un emmanchement à force, par exemple par collage.

Enfin, un dernier mode de réalisation est représenté sur la figure 3. Les éléments identiques à ceux du premier et du deuxième mode de réalisation portent les mêmes références et ne seront pas à nouveau décrits.

Ce mode de réalisation diffère du précédent uniquement par le fait que la collerette de centrage 244 appartient au capuchon de protection 210 qui est emmanché à force dans l'alésage 143a du disque de frein 104 et qui masque l'alésage central du moyeu 5 de la roue 201.

La collerette de centrage 244 est encore une pièce indépendante du disque 104 dont le diamètre extérieur est le même que celui de la douille 144 du mode de réalisation précédent. La partie 244b de la collerette constitue également une portée participant au centrage de la roue 201 sur le disque 104.

Ainsi, ce type de collerette 244 présente le double avantage de permettre un centrage précis de la roue 201 sur le disque 104 et d'assurer une fonction de protection et d'étanchéité de l'ensemble moyeu 5, fusée 7, écrou 8 et rondelle 9 par rapport à l'extérieur de la roue 201.

Comme impliqué plus haut à propos de la douille 144, les moyens de fixation du capuchon 210 au disque 104 peuvent différer de l'emmanchement à force.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, défini par les revendications suivantes.

## Revendications

1. Roue (1) de véhicule utilitaire du genre poids lourd, leur remorque et semi-remorque, comportant une jante (3), un voile de roue (2) lié solidement à ladite jante (3), un moyeu (5), un disque de frein (4, 104), ledit voile (2) et ledit disque (4, 104) comprenant un alésage central (21, 43a, 143a) plus petit que le diamètre externe dudit moyeu (5), et une pluralité de moyens de fixation (6) fixant à la fois ledit voile (2) et ledit disque (4, 104) audit moyeu (5), lesdits moyens de fixation (6) étant répartis sur un cercle au moins approximativement centré par rapport à l'axe dudit moyeu (5), ledit moyeu (5) comportant une portée (52b) destinée à coopérer avec une portée (42b) de diamètre correspondant dudit disque de frein (4, 104) pour centrer axialement ledit disque (4, 104), ladite portée (52b) dudit moyeu est cylindrique et disposée radialement à l'extérieur par rapport aux moyens de fixation (6) du voile et du disque, ladite portée (42b) dudit disque de frein étant cylindrique, **caractérisé en ce que** ledit disque de frein (4, 104) coopère avec une collerette (44, 144, 244) reçue dans et disposée coaxialement à l'alésage (21) central du voile de roue (2) et radialement à l'intérieur par rapport aux moyens de fixation (6) du voile et du disque sur le moyeu (5) et formant une portée cylindrique (44b, 144b, 244b) de diamètre correspondant au diamètre intérieur calibré dudit alésage central (21) du voile de roue pour centrer axialement ledit voile de roue (2).

2. Roue selon la revendication 1, **caractérisée en ce que** ladite collerette (44) fait partie intégrante dudit disque de frein (4).

3. Roue selon la revendication 1, **caractérisée en ce que** ladite collerette (144, 244) est une pièce rapportée fixée dans ledit alésage central (143a) dudit disque de frein (104).

4. Roue selon la revendication 3, **caractérisée en ce que** ladite collerette (244) appartient à un capuchon de protection masquant l'alésage central du moyeu de la roue (5).

5. Roue selon l'une quelconque des revendications précédentes, **caractérisée en ce que** la collerette (44, 144, 244) est continue dans le sens circonférentiel.

6. Roue selon l'une quelconque des revendications 1 à 4, **caractérisée en ce que** la collerette (44, 144, 244) est discontinue dans le sens circonférentiel.

7. Roue selon l'une quelconque des revendications 1 à 4, **caractérisée en ce que** la collerette (44, 144, 244) comporte des zones discontinues de centrage espacées le long de sa circonférence et constituant des portées préférentielles d'appui et de centrage pour le voile (2).

## Claims

1. Wheel (1) for a utility vehicle of the heavy goods type, their trailer and semi-trailer, comprising a rim (3), a wheel disc (2) solidly attached to the said rim (3), a hub (5), a brake disc (4, 104), the said wheel disc (2) and the said brake disc (4, 104) including a central hole (21, 43a, 143a) smaller than the external diameter of the said hub (5) and a series of fastening means (6) fastening both the said wheel disc (2) and the said brake disc (4, 104) to the said hub (5), the said fastening means (6) being distributed in a circle at least approximately centred in relation to the axis of the said hub (5), the said hub (5) comprising a bearing surface (52b) designed to cooperate with a bearing surface (42b) of corresponding diameter on the said brake disc (4, 104) to axially centre the said brake disc (4, 104), the said bearing surface (52b) of the said hub is cylindrical and radially disposed outside in relation to the means for fastening (6) the wheel disc and the brake disc, the said bearing surface (42b) of the said brake disc being cylindrical, **characterized in that** the said brake disc (4, 104) cooperates with a flange (44, 144, 244) received in and disposed coaxially to the central hole (21) of the wheel disc (2) and radially inside in relation to the means for fastening (6) the wheel disc and the brake disc to the hub (5) and forming a cylindrical bearing surface (44b, 144b, 244b) of corresponding diameter to the calibrated internal diameter of the said central hole (21) of the wheel disc to axially centre the said wheel disc (2).

2. Wheel according to Claim 1, **characterized in that** the said flange (44) is an integral part of the said brake disc (4).

3. Wheel according to Claim 1, **characterized in that** the said flange (144, 244) is an added piece fixed inside the said central hole (143a) of the said brake disc (104).

4. Wheel according to Claim 3, **characterized in that** the said flange (244) is part of a protective cap covering the central hole of the wheel hub (5).

5. Wheel according to any one of the preceding claims, **characterized in that** the flange (44, 144, 244) is circumferentially continuous.

6. Wheel according to any one of Claims 1 to 4, **characterized in that** the flange (44, 144, 244) is circumferentially discontinuous.

7. Wheel according to any one of Claims 1 to 4, **characterized in that** the flange (44, 144, 244) comprises discontinuous centring zones spaced along its circumference and constituting preferential bearing and centring surfaces for the wheel disc (2).

## Patentansprüche

1. Rad (1) eines Nutzfahrzeuges, wie eines Lastkraftwagens, dessen Anhängers und Sattelschleppers, mit einer Radfelge (3), einer fest mit der Radfelge (3) verbundenen Radschüssel (2), einer Nabe (5), einer Bremsscheibe (4, 104), wobei die Schüssel (2) und die Scheibe (4, 104) eine Zentralbohrung (21, 43a, 143a), die kleiner ist als der Außendurchmesser der Nabe (5), und mehrere Befestigungsmittel (6), welche gleichzeitig die Schüssel (2) und die Scheibe (4, 104) an der Nabe (5) befestigen, umfassen, wobei die Befestigungsmittel (6) auf einem Kreis verteilt sind, der wenigstens näherungsweise auf der Achse der Nabe (5) zentriert ist, wobei die Nabe (5) eine Anlagefläche (52b) aufweist, welche mit einer Anlagefläche (42b) mit entsprechendem Durchmesser der Bremsscheibe (4, 104) zusammenwirken kann, um die Scheibe (4, 104) axial zu zentrieren, wobei die Anlagefläche (52b) der Nabe zylindrisch ausgebildet und bezüglich der Befestigungsmittel (6) der Schüssel und der Scheibe radial außen angeordnet ist, und wobei die Anlagefläche (42b) der Bremsscheibe zylindrisch ist, **dadurch gekennzeichnet, dass** die Bremsscheibe (4,104) mit einem Kragen (44, 144, 244) zusammenwirkt, der in der Zentralbohrung (21) der Radschüssel (2) aufgenommen und zu dieser koaxial und bezüglich der Befestigungsmittel (6) der Schüssel und der Scheibe radial innen auf der Nabe (5) angeordnet ist und eine zylindrische Anlagefläche (44b, 144b, 244b) bildet, die einen Durchmesser aufweist, der dem kalibrierten Innendurchmesser der Zentralbohrung (21) der Radschüssel entspricht, um die Radschüssel (2) axial zu zentrieren.

2. Rad gemäß Anspruch 1, **dadurch gekennzeichnet, dass** der Kragen (44) ein integrales Teil der Bremsscheibe (4) bildet.

3. Rad gemäß Anspruch 1, **dadurch gekennzeichnet, dass** der Kragen (144, 244) ein fest in die Zentralbohrung (143a) der Bremsscheibe (104) eingebautes Bauteil ist.

4. Rad gemäß Anspruch 3, **dadurch gekennzeichnet, dass** der Kragen (244) zu einer Schutzkappe gehört, welche die Zentralbohrung der Radnabe (5) abdeckt.

5. Rad gemäß einem der vorhergehenden Ansprüche, **dadurch gekennzeichnet, dass** der Kragen (44, 144, 244) in Umfangsrichtung kontinuierlich ist.

6. Rad gemäß einem der Ansprüche 1 bis 4, **dadurch gekennzeichnet, dass** der Kragen (44, 144, 244) in Umfangsrichtung diskontinuierlich ist.

7. Rad gemäß einem der Ansprüche 1 bis 4, **dadurch gekennzeichnet, dass** der Kragen (44, 144, 244) diskontinuierliche Zentrierbereiche aufweist, die entlang seines Umfangs verteilt sind und bevorzugte Auflage- und Zentrierflächen für die Schüssel (2) bilden.
